Europäisches Patentamt

European Patent Office

Office européen des brevets

(19)

(11) **EP 1 058 435 B1**

(12) **FASCICULE DE BREVET EUROPEEN**

(45) Date de publication et mention
de la délivrance du brevet:
**27.07.2005 Bulletin 2005/30**

(51) Int Cl.$^7$: **H04L 27/26**, G06T 1/60

(21) Numéro de dépôt: **00401470.0**

(22) Date de dépôt: **25.05.2000**

(54) **Procédé et dispositif de calcul d'une transformation de Fourier inverse à architecture dite "pipelinée"**

Verfahren und Einrichtung zur inversen Fouriertransformation in Pipeline-Architektur

Method and apparatus for inverse Fourier transform in pipelined architecture

(84) Etats contractants désignés:
**DE FR GB IT**

(30) Priorité: **02.06.1999 FR 9906963**

(43) Date de publication de la demande:
**06.12.2000 Bulletin 2000/49**

(73) Titulaires:
• **STMicroelectronics S.A.**
  **92120 Montrouge (FR)**
• **FRANCE TELECOM**
  **75015 Paris (FR)**

(72) Inventeurs:
• **Cambonie, Joel**
  **38190 La Combe de Lancey (FR)**
• **Mejean, Philippe**
  **38000 Grenoble (FR)**
• **Barthel, Dominique**
  **38190 Bernin (FR)**
• **Lienard, Joel**
  **38240 Meylan (FR)**
• **Mazzoni, Simone**
  **38000 Grenoble (FR)**

(74) Mandataire: **Casalonga, Axel**
**BUREAU D.A. CASALONGA - JOSSE**
**Paul-Heyse-Strasse 33**
**80336 München (DE)**

(56) Documents cités:
**EP-A- 0 855 657**

• **SHOUSHENG HE ET AL: "Designing pipeline FFT processor for OFDM (de)modulation" 1998 URSI INTERNATIONAL SYMPOSIUM ON SIGNALS, SYSTEMS, AND ELECTRONICS. CONFERENCE PROCEEDINGS (CAT. NO.98EX167), 1998 URSI INTERNATIONAL SYMPOSIUM ON SIGNAL, SYSTEMS, AND ELECTRONICS. CONFERENCE PROCEEDINGS, PISA, ITALY, 29 SEPT.-2 OCT. 1998, pages 257-262, XP002120095 1998, IEEE INC. New York,US ISBN: 0-7803-4900-8**
• **BIDET E ET AL: "A FAST SINGLE-CHIP IMPLEMENTATION OF 8192 COMPLEX POINT FFT" IEEE JOURNAL OF SOLID-STATE CIRCUITS,IEEE INC. NEW YORK,US, vol. 30, no. 3, 1 mars 1995 (1995-03-01), pages 300-305, XP000502815 ISSN: 0018-9200**
• **BI G ET AL: "A pipelined FFT processor for word-sequential data" IEEE TRANSACTIONS ON ACOUSTICS, SPEECH AND SIGNAL PROCESSING, DEC. 1989, IEEE INC. NEW YORK,US, vol. 37, no. 12, pages 1982-1985, XP002129950 ISSN: 0096-3518**
• **AGARWAL R C ET AL: "VECTORIZED MIXED RADIX DISCRETE FOURIER TRANSFORM ALGORITHMS" PROCEEDINGS OF THE IEEE,IEEE INC. NEW YORK,US, vol. 75, no. 9, 1 septembre 1987 (1987-09-01), pages 1283-1292, XP000560563 ISSN: 0018-9219**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne la transformation d'un flot de symboles complexes initiaux respectivement formés de N échantillons complexes initiaux, en un flot de groupes respectifs de 2N données réelles de sortie, par un traitement du type entrelacé.

L'invention s'applique avantageusement mais non limitativement aux systèmes de transmission d'informations codées selon un codage OFDM (Orthogonal frequency division multiplex : "multiplexage à répartition orthogonale de fréquence").

Un tel système forme par exemple la partie émettrice d'un dispositif de modulation-démodulation (Modem) numérique à très haute vitesse (Modem VDSL).

Dans un codage OFDM, le signal à transmettre est codé sur N porteuses modulées en phase et en amplitude en fonction du contenu des informations à transmettre. Chaque porteuse a une fréquence prédéterminée et toutes les fréquences des porteuses sont un sous-multiple d'une fréquence d'échantillonnage prédéterminée. Et chaque symbole formé de N porteuses numériques, qui sont N échantillons complexes échantillonnés à la fréquence d'échantillonnage, doit être transformé en un groupe de 2N données réelles échantillonnées au double de la fréquence d'échantillonnage, afin de pouvoir être transmises sur un canal de transmission, en particulier une ligne téléphonique.

La transformation d'un symbole complexe initial respectivement formé de N échantillons complexes initiaux, en un groupe de 2N données réelles de sortie, peut être effectuée de plusieurs façons.

Une première solution consiste à effectuer une transformée de Fourier inverse de taille double, c'est-à-dire de taille 2N. Cependant, une telle solution nécessite l'adjonction d'un étage de traitement supplémentaire ainsi que l'adjonction de mémoire supplémentaire.

Une deuxième solution consiste à effectuer une transformée de Fourier inverse de taille simple, c'est-à-dire de taille N, suivie d'un filtrage complexe afin d'éliminer une partie du spectre. Or, une telle mise en oeuvre conduit à une réalisation matérielle relativement compliquée.

Une troisième solution consiste à effectuer toujours une transformée de Fourier inverse de taille N, mais cette fois-ci suivie d'un filtrage réel. Cependant, une telle solution, plus simple à mettre en oeuvre que la solution précédente, est toutefois approximative en ce qui concerne la précision obtenue en raison d'un rapport signal/bruit qui peut s'avérer relativement important conduisant à des dégradations du signal. Et, l'augmentation des performances de cette solution, c'est-à-dire la diminution du rapport signal/bruit, nécessite l'utilisation d'un filtre réel extrêmement important, ce qui implique une mise en oeuvre matérielle coûteuse.

Une autre solution consiste à effectuer la transformation du flot de symboles complexes initiaux respectivement formés de N échantillons complexes initiaux, en un flot de groupes respectifs de 2N données réelles de sortie, par un traitement du type entrelacé dont la formulation théorique est bien connue de l'homme du métier.

On rappelle ici, à toutes fins utiles, les principales caractéristiques d'un traitement du type entrelacé.

Le signal réel x(t) correspondant par exemple à un symbole OFDM, est défini par la formule (I) :

$$x(t) = \sum_{k=1}^{N-1} M_k \cdot \cos(2\pi f_k t + \varphi_k) \qquad (I)$$

dans laquelle $M_k$ désigne l'amplitude de la porteuse de rang k, $\varphi_k$ désigne sa phase, $f_k$ sa fréquence et N-1 le nombre de porteuses. Lorsque les fréquences des porteuses sont toutes multiples d'une fréquence $f_1$, alors la formule (I) devient la formule (II) en notation complexe :

$$x(t) = \text{Re}\left[\sum_{k=1}^{N-1} C_k \cdot e^{2j\pi k f_1 t}\right] , \qquad (II)$$

dans laquelle $C_k$ désigne l'échantillon complexe intial représentatif de la porteuse de rang k. $C_k$ est défini par la formule (III) :

$$C_k = M_k \cdot e^{j\varphi}{}_k \qquad \text{(III)}$$

Avec un échantillonnage du signal à la fréquence $Nf_1$ et en étendant la longueur du symbole à N porteuses (par l'adjonction de la porteuse $C_0$ prise égale à 0), on montre alors que les N données réelles de sortie de rangs pairs, correspondant au N échantillons complexes du symbole d'entrée, sont données par la formule (IV) :

$$\left\{x_{2p}\right\} = \mathrm{Re}\left(\mathrm{IFFT}_N\left\{(C_k + \overline{C}_{N-k}) + j(C_k - \overline{C}_{N-k})e^{\frac{j\pi}{N}k}\right\}\right) \qquad \textbf{(IV)}$$

tandis que les données réelles de rangs impairs $x_{2p+1}$ sont données par la formule (V) :

$$\left\{x_{2p+1}\right\} = \mathrm{Im}\left(\mathrm{IFFT}_N\left\{(C_k + \overline{C}_{N-k}) + j(C_k - \overline{C}_{N-k})e^{\frac{j\pi}{N}k}\right\}\right) \quad \textbf{(V)}$$

Dans ces formules (IV) et (V), $\overline{C}_{N-k}$ représente le nombre complexe conjugué du nombre complexe $C_{N-k}$, $\mathrm{IFFT}_N$ représente l'opérateur "transformée de Fourier inverse de taille N", Im désigne la partie imaginaire d'un nombre complexe et Re désigne la partie réelle d'un nombre complexe.

On voit donc que le traitement du type entrelacé comporte une phase de prétraitement dans laquelle, pour chaque symbole initial reçu formé de N échantillons complexes initiaux $C_k$, on élabore un symbole auxiliaire formé de N échantillons complexes auxiliaires $A_k$, chaque échantillon complexe auxiliaire $A_k$ étant défini par la formule (VI) :

$$A_k = (C_k + \overline{C}_{N-k}) + j(C_k - \overline{C}_{N-k})e^{j\pi\kappa/N} \qquad \text{(VI)}$$

Après ce prétraitement, on effectue une phase de traitement comportant pour chaque symbole auxiliaire formé des échantillons auxiliaires $A_k$, un calcul de transformée de Fourier inverse de taille N. Le résultat de cette transformée de Fourier inverse est un jeu de N coefficients complexes de sortie $X_k$ qui, après réarrangement pour retrouver l'ordre d'entrée, permet d'obtenir aisément les 2N données réelles correspondant au symbole d'entrée puisque les données réelles de rangs pairs et impairs correspondent respectivement aux parties réelles et imaginaires des échantillons complexes de sortie successivement obtenus après réarrangement.

Actuellement, la seule mise en oeuvre connue de ce traitement entrelacé est une mise en oeuvre entièrement logicielle qui s'avère relativement complexe à utiliser dans des appareils industriels comme par exemple des modems. En outre, plus la taille de la transformée de Fourier est importante et plus la vitesse de traitement augmente, plus les contraintes d'implémentation deviennent sévères.

Par ailleurs, de nombreuses implémentations de transformées de Fourier directes ou inverses, dédiées ou programmées sur des microprocesseurs de traitement du signal ont été exposées dans la littérature. La plupart de ces implémentations utilisent une variante de l'algorithme de Cooley-Tukey, bien connu de l'homme du métier, qui permet de réduire le nombre d'opérations arithmétiques nécessaires au calcul de la transformée de Fourier. Cet algorithme permet ainsi notamment de réduire le calcul d'une transformée de Fourier rapide de taille initiale $r^P$, où r représente le "radix" selon une dénomination habituellement utilisée par l'homme du métier, en celui de r transformées de Fourier de taille $r^{p-1}$ et d'additions et de multiplications complexes supplémentaires. En réitérant cette réduction, on arrive au calcul de transformées de Fourier de taille r, aisément réalisables, notamment si r est choisi égal à 2 ou 4.

L'algorithme de Cooley-Tukey utilise un graphe de calcul faisant apparaître une structure en forme générale de papillon, bien connue de l'homme du métier, et communément désignée en langue anglaise sous le terme "butterfly".

Plusieurs architectures matérielles sont alors possibles pour implémenter une structure de calcul en forme de papillon.

Une première solution consiste à réaliser un opérateur matériel capable d'effectuer un calcul de type papillon, par papillon du graphe. Cependant, une telle solution n'est envisageable que pour l'implémentation de transformées de Fourier de petite taille.

Une deuxième solution consiste à ne réaliser qu'un seul opérateur matériel du type papillon, et destiné à effectuer successivement les calculs correspondant à tous les papillons de tous les étages du graphe. Une telle solution nécessite d'une part un opérateur matériel très rapide, et d'autre part une mémoire d'entrée distincte de la mémoire servant à écrire les résultats intermédiaires de calcul et ce, afin d'éviter les conflits d'accès lorsqu'un bloc de données entre dans l'opérateur alors que le bloc précédent est encore en cours de traitement.

Cette solution où seul un opérateur matériel du type papillon est utilisé, est illustrée par exemple dans la demande de brevet EP-A-855-657 qui comprend 2 mémoires vives indépendantes dont une est utilisée pour le calcul FFT avec des symboles pairs, et l'autre pour le calcul avec des symboles impairs.

Une solution intermédiaire consiste à réaliser un opérateur matériel du type papillon par étage du graphe, ainsi qu'un élément de mémorisation, tel que par exemple des lignes à retard ou des registres à décalage, dont la fonction est de présenter en entrée de l'opérateur les données dans le bon ordre compte tenu des papillons du graphe de l'étage considéré.

De telles architectures sont dites "série" ou "pipelinées" selon une dénomination usuelle employée par l'homme du métier.

Plus précisément, un dispositif électronique de calcul d'une transformée de Fourier dite "à architecture pipelinée" comprend une pluralité d'étages de traitement successifs connectés en série entre l'entrée et la sortie du dispositif par des chemins de données internes. Ces étages comportent respectivement d'une part des moyens de traitement élémentaires aptes à effectuer des traitements de transformée de Fourier de tailles élémentaires plus faibles que la taille initiale, sur des blocs de données de tailles successivement réduites d'un étage au suivant et, d'autre part, des moyens de mémorisation élémentaires.

Par "taille initiale" de la transformée de Fourier on entend ici et dans la suite du texte la taille des blocs reçus en entrée du dispositif par le premier étage.

Les tailles élémentaires des transformées de Fourier effectuées par les différents étages peuvent être identiques et égales au radix de la transformée de Fourier. On parle alors de transformée de Fourier à radix "uniforme." Elles peuvent être différentes d'un étage à l'autre dans le cas de transformées de Fourier à radix "mixte".

Des exemples de telles architectures pipelinées sont décrits dans l'article de BI et JONES intitulé "a Pipelined FFT Processor for Word-Sequential Data", IEEE Transactions on Acoustic Speech and Signal Processing, vol. 37, n°12, décembre 1989, pages 1982-1985, et dans l'article de BIDET et autres, intitulé "A Fast Single-Chip Implementation of 8192 Complex Point FFT", IEEE Journal of Solid-State Circuits, vol. 30, n°3, mars 1995, pages 300-305.

Les moyens de mémorisation décrits dans ces architectures connues, comportent des lignes à retard qui sont des éléments très simples à gérer et qui présentent l'avantage d'être généralement compacts (utilisation de trois transistors par bit mémorisé). Cependant, ces éléments ne sont pas toujours disponibles en tant que cellules standard dans des librairies usuelles de composants utilisables pour la définition et la conception des circuits intégrés. En outre, leurs caractéristiques électriques sont dépendantes de la technologie utilisée de telle sorte que l'architecture du circuit doit être soigneusement ré-étudiée à chaque fois que la technologie évolue.

Par ailleurs, de telles architectures utilisent des lignes à retard dont la capacité totale de stockage est égale à 2N0 pour une taille initiale de transformée de Fourier égale à N0, alors que la capacité minimale théorique de stockage est égale à N0.

L'un des buts de l'invention est d'utiliser une mémoire vive, en particulier simple accès, comme moyen de stockage dans chaque étage d'une architecture pipelinée.

L'utilisation d'une mémoire à accès aléatoire (mémoire vive), qu'elle soit double accès (à double port) ou simple accès (à port unique, c'est-à-dire autorisant soit un accès en écriture, soit un accès en lecture à chaque cycle de l'horloge interne du dispositif), nécessite une gestion spécifique d'adressage pour stocker et redélivrer dans le bon ordre les données intermédiaires mémorisées, gestion d'autant plus complexe que le radix de la transformée de Fourier est supérieur à 2, en particulier lorsqu'il est égal à 4, et va à l'encontre de tous les enseignements actuels en la matière qui prévoient l'utilisation de lignes à retard ou de registres à décalage.

Il a été observé par ailleurs que l'utilisation d'une mémoire à accès aléatoire permettait de réduire la capacité de stockage étage par étage, et donc la capacité totale de stockage du dispositif, par rapport à la capacité de stockage nécessaire lors de l'emploi de lignes à retard.

Un tel composant est en outre aisément disponible dans les librairies usuelles de composants, en particulier dans sa forme la plus simple (mémoire simple accès), et est totalement indépendant de la technologie utilisée et parfaitement compatible avec des fréquences d'horloge très élevées.

Dans une architecture pipelinée utilisant une mémoire simple accès, le temps de latence, c'est-à-dire la durée séparant l'arrivée du premier échantillon d'un symbole et la délivrance du premier échantillon complexe de sortie, est d'environ 3 N/2 cycles du signal d'horloge de base cadençant la réception des échantillons complexes initiaux (dont N cycles pour le remplissage de la mémoire du premier étage) .

Par ailleurs, le prétraitement consistant à élaborer à partir de chaque symbole complexe initial un symbole complexe auxiliaire, et à le stocker dans une mémoire simple accès, nécessite également une latence de N cycles du signal d'horloge de base.

La durée de latence totale (prétraitement puis transfert du symbole auxiliaire de sa mémoire de stockage dans la mémoire du premier étage puis transformée de Fourier inverse) s'élève donc à 5 N/2 cycles du signal d'horloge de base. Or, une telle durée de latence peut s'avérer incompatible avec des applications de transmission haute vitesse comme par exemple celles utilisant des modems VDSL travaillant à 55 Mbits/seconde.

En d'autres termes, pour de telles applications haute vitesse, l'utilisation d'un traitement du type entrelacé utilisant une architecture du type pipeliné pour l'implémentation du calcul de transformée de Fourier inverse, s'avère actuellement impossible à mettre en oeuvre.

L'invention vise à apporter une solution à ce problème.

L'invention a notamment pour but d'utiliser une implémentation de transformée de Fourier inverse à architecture pipelinée utilisant une mémoire vive, en particulier simple accès, pour chaque étage de traitement, notamment le premier, tout en optimisant la latence de façon à obtenir, malgré la phase de prétraitement du traitement du type entrelacé, une durée de latence égale à celle des moyens de calcul de transformée de Fourier inverse seuls, c'est-à-dire 3N/2 cycles pour une transformée de Fourier inverse de taille N;

L'invention propose donc un procédé de transformation d'un flot de symboles complexes initiaux respectivement formés de N échantillons complexes initiaux, en un flot de groupes respectifs de 2N données réelles de sortie, par un traitement du type entrelacé comportant une phase de prétraitement dans laquelle pour chaque symbole initial reçu, on élabore un symbole auxiliaire formé de N échantillons complexes auxiliaires, et une phase de traitement comportant pour chaque symbole auxiliaire un calcul de transformée de Fourier inverse de taille N incluant des traitements élémentaires du type papillon correspondant à plusieurs étages d'un graphe de calcul en forme générale de papillon, et délivrant les 2N données réelles de sortie correspondant au symbole initial reçu.

Selon une caractéristique générale de l'invention, les différents étages du graphe sont implémentés au sein d'une architecture pipelinée, et, lors de la réception d'un symbole initial, on utilise simultanément deux mémoires vives distinctes, en particulier simple accès, pour respectivement stocker dans une première mémoire le symbole auxiliaire correspondant à ce symbole initial et effectuer à partir du contenu de la deuxième mémoire le traitement élémentaire correspondant au premier étage du graphe. En outre, on permute les deux mémoires à chaque nouvelle réception d'un symbole initial.

En d'autres termes, lors de la réception d'un symbole initial courant, on stocke le symbole auxiliaire élaboré correspondant dans une première mémoire, tandis qu'on effectue le traitement élémentaire correspondant au premier étage du graphe à partir du contenu d'une deuxième mémoire (cette deuxième mémoire contenant le symbole auxiliaire élaboré correspondant au symbole initial précédent). Puis, lors de la réception du symbole initial suivant, on stocke le symbole auxiliaire élaboré correspondant dans la deuxième mémoire, tandis qu'on effectue le traitement élémentaire correspondant au premier étage du graphe à partir du contenu de la première mémoire (traitement élémentaire du symbole auxiliaire correspondant au symbole initial courant), et ainsi de suite pour la réception des symboles suivants.

La mise en oeuvre simultanée du prétraitement et du traitement élémentaire correspondant au premier étage du graphe au cours de chaque réception d'un symbole complexe initial, en combinaison avec l'utilisation de deux mémoires alternativement utilisées pour le prétraitement et pour le traitement élémentaire des transformées de Fourier lors des réceptions successives des symboles, permet de s'affranchir du transfert des échantillons auxiliaires de l'une des mémoires dans l'autre, et de commencer le traitement de transformée de Fourier dès la fin du remplissage de l'une des mémoires. On économise ainsi un certain nombre de cycles d'horloge de base.

Selon un mode de mise en oeuvre particulièrement simple, les deux mémoires sont des mémoires à accès aléatoire simple accès de structure identique. On élabore et on stocke par paire les échantillons complexes auxiliaires dans la mémoire correspondante. L'élaboration et le stockage de chaque paire s'effectue au cours d'un cycle d'horloge du signal d'horloge de base cadençant la réception des échantillons complexes initiaux.

La structure identique des mémoires permet une permutation aisée des mémoires.

Lorsque deux mémoires simple accès sont utilisées en combinaison avec la commutation de ces mémoires, le temps de latence total est égal à 3N/2 cycles du signal d'horloge de base (N cycles pour le prétraitement et N/2 cycles pour obtenir les échantillons de sortie après transformée de Fourier).

Selon un mode de mise en oeuvre, on élabore l'échantillon auxiliaire de rang k à partir d'une paire d'échantillons initiaux appariés formés par l'échantillon initial de rang k au sein du symbole initial et de l'échantillon initial de rang N-k. Au sens de la présente invention, deux échantillons sont dits appariés lorsque la somme de leurs rangs respectifs est égale à N.

Par ailleurs, si r désigne le radix de la transformée de Fourier élémentaire inverse associée au premier étage du graphe, on subdivise chacune des deux mémoires en r bancs mémoire indépendants de taille identique égale à N/r. On reçoit alors avec chaque échantillon initial une indication de rang représentative de son rang au sein du symbole et une indication d'appariement indiquant si l'échantillon initial est le premier reçu ou le deuxième reçu de la paire correspondante.

Si l'indication d'appariement associée à un échantillon initial est représentative du premier reçu, on stocke cet échantillon dans la mémoire correspondante, tandis que si l'indication d'appariement associée à un échantillon initial est représentative du deuxième reçu, on extrait de ladite mémoire correspondante l'échantillon initial apparié à cet échantillon reçu en deuxième. On élabore à partir de ces deux échantillons initiaux appariés de rang k et de rang N-k, les deux échantillons auxiliaires appariés de rang k et de rang N-k. On stocke ces deux échantillons auxiliaires appariés dans deux bancs mémoire distincts de la même mémoire correspondante, respectivement aux adresses de stockage associées aux deux échantillons initiaux de rang k et de rang N-k. Le traitement élémentaire de transformée de Fourier du premier étage du graphe s'effectue successivement sur les N/r groupes d'échantillons auxiliaires respectivement stockés à la même adresse dans les r bancs mémoire de l'autre mémoire correspondante.

Plus particulièrement, lorsque les bancs mémoire sont indexés de 0 à r-1 et tous adressables à des adresses comprises entre 0 et r-1, si l'indication d'appariement associée à un échantillon initial de rang k est représentative du premier reçu, on stocke cet échantillon dans le banc mémoire dont l'index est égal à E[rk/N], où E désigne l'opérateur partie entière, à l'adresse k modulo N/r.

Par contre, si l'indication d'appariement associée à un échantillon initial de rang k est représentative du deuxième reçu, on extrait de la mémoire l'échantillon initial apparié stocké dans le banc mémoire d'index égal à E[r(N-k)/N], à l'adresse (N-k) modulo N/r, puis on élabore l'échantillon auxiliaire de rang k que l'on stocke dans le banc mémoire d'index égal à E[rk/N], à l'adresse k modulo N/r.

On élabore également l'échantillon auxiliaire de rang N-k que l'on stocke dans le banc mémoire d'index égal à E[r(N-k)/N], à l'adresse (N-k) modulo N/r.

L'invention a également pour objet un dispositif de transformation d'un flot de symboles complexes initiaux respectivement formés de N échantillons complexes initiaux, en un flot de groupes respectifs de 2N données réelles de sortie, ce dispositif comprenant des moyens de transformation du type entrelacé comportant des moyens de prétraitement aptes à élaborer pour chaque symbole initial reçu un symbole auxiliaire formé de N échantillons complexes auxiliaires, et des moyens de traitement aptes à effectuer pour chaque symbole auxiliaire un calcul de transformée de Fourier inverse de taille N incluant des traitements élémentaires du type papillon correspondant à plusieurs étages d'un graphe de calcul en forme générale de papillon, et délivrant les 2N données réelles de sortie correspondant au symbole initial reçu.

Selon une caractéristique générale de l'invention, les moyens de traitement sont à architecture pipelinée et le dispositif comporte deux mémoires vives distinctes. Lors de la réception d'un symbole initial, les moyens de prétraitement sont aptes à stocker dans une première mémoire le symbole auxiliaire correspondant à ce symbole initial et, simultanément, les moyens de traitement élémentaires du premier étage des moyens de traitement à architecture pipelinée sont aptes à effectuer à partir du contenu de la deuxième mémoire, le traitement élémentaire correspondant au premier étage du graphe. Le dispositif comprend en outre des moyens de commande aptes à permuter l'accès aux deux mémoires par les moyens de traitement élémentaires, à chaque nouvelle réception d'un symbole initial.

Selon un mode de réalisation particulièrement simple de l'invention, les deux mémoires sont des mémoires à accès aléatoire simple accès de structure identique. Les moyens de prétraitement sont aptes à élaborer et à stocker par paire les échantillons complexes auxiliaires dans la mémoire correspondante.

Selon un mode de réalisation de l'invention, les moyens de prétraitement sont aptes à élaborer l'échantillon auxiliaire de rang k à partir d'une paire d'échantillons initiaux appariés formée par l'échantillon initial de rang k au sein du symbole initial et de l'échantillon initial de rang N-k. Si r désigne le radix de la transformée de Fourier élémentaire inverse associée au premier étage du graphe, chacune des deux mémoires est subdivisée en r bancs mémoire indépendants de taille identique égale à N/r. Les bancs mémoire sont indexés de 0 à r-1 et tous adressables par des adresses comprises entre 0 et N/r-1. A chaque échantillon initial reçu, sont associées une indication de rang représentative de son rang au sein du symbole et une indication d'appariement indiquant si l'échantillon initial reçu est le premier reçu ou le deuxième reçu de la paire correspondante.

Si l'indication d'appariement associée à un échantillon initial de rang k est représentative du premier reçu, les moyens de prétraitement sont aptes à stocker cet échantillon dans le banc mémoire d'index égal à E[rk/N], à l'adresse k modulo N/r.

Si l'indication d'appariement associée à un échantillon initial de rang k est représentative du deuxième reçu, les moyens de prétraitement sont aptes à extraire de la mémoire l'échantillon initial apparié stocké dans le banc mémoire d'index égal à E[r(N-k)/N], à l'adresse (N-k) modulo N/r.

Les moyens de prétraitement sont ensuite aptes à élaborer l'échantillon auxiliaire de rang k et à le stocker dans le banc mémoire d'index égal à E[rk/N], à l'adresse k modulo N/r, et à élaborer l'échantillon auxiliaire de rang N-k et à le stocker dans le banc mémoire d'index égal à E[r(N-k)/N], à l'adresse (N-k) modulo N/r.

Les moyens de traitement élémentaires effectuent successivement des traitements de type papillon sur les N/r groupes d'échantillons auxiliaires respectivement stockés à la même adresse dans les r bancs mémoire de la mémoire correspondante.

D'autres avantages et caractéristiques de l'invention apparaîtront à la description de modes de réalisation et de mises en oeuvre, nullement limitatifs, et des dessins annexés, sur lesquels :

- la figure 1 illustre un opérateur de transformée de Fourier inverse en forme de papillon à radix 4;
- la figure 2 est un synoptique schématique d'une implémentation de transformée de Fourier inverse à architecture pipelinée selon l'invention, à deux étages de traitement;
- la figure 3 illustre des traitements de type papillon effectués dans ces étages;
- la figure 4 illustre très schématiquement une implémentation de l'invention au sein de modem dialoguant via une ligne téléphonique;
- la figure 5 illustre schématiquement plus en détail l'architecture de l'un des modems;
- la figure 6 illustre schématiquement plus en détail une partie des moyens illustrés sur la figure 5; et
- les figures 7a à 7c illustrent schématiquement la structure et l'utilisation des deux mémoires qui sont alternativement utilisées selon l'invention par les moyens de prétraitement et le premier étage des moyens de traitement effectuant le calcul de transformée de Fourier inverse.

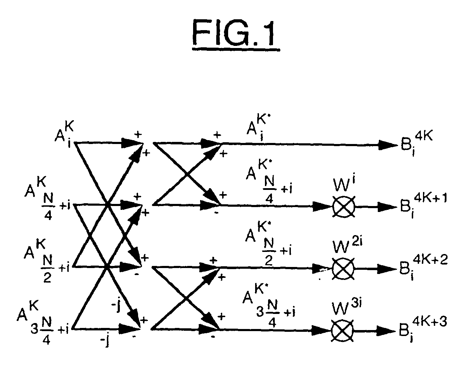

On fait maintenant référence plus particulièrement à la figure 1.

D'une façon générale, si pour un étage de traitement à radix 4, la taille du bloc d'échantillons (ou symbole) reçu en entrée est égale à N, ce bloc d'échantillons peut être décomposé en quatre segments de N/4 échantillons chacun, temporellement reçus consécutivement. Le premier segment est formé des échantillons $A_i^K$, le deuxième segment est formé des échantillons $A_{N/4+i}^K$, le troisième segment est formé des échantillons $A_{N/2+i}^K$ et le quatrième segment est formé des échantillons $A_{3N/4+i}^K$, i variant de 0 à N/4 - 1, et représentant le nombre de traitements du type papillon effectué dans l'étage sur chaque bloc d'échantillons reçu. K représente le $K^{\text{ème}}$ bloc reçu par l'étage. i est égal à k modulo 4 où k représente le rang de la donnée dans le bloc (ou symbole).

Par ailleurs, l'homme du métier sait que si s désigne le rang de l'étage considéré, N est égal à N0/4$^s$ où N0 désigne la taille initiale de la transformée de Fourier inverse, c'est-à-dire la taille de chaque symbole reçu par l'étage d'entrée.

En outre, si l'étage considéré est le premier, N est égal à N0 et le Kème bloc correspond au Kème symbole reçu.

Par contre, si l'étage considéré n'est pas le premier (rang s différent de 0), chaque symbole en entrée du dispositif se décompose récursivement aus sein de chaque étage en 4$^s$ blocs K (K variant de 0 à 4$^s$-1).

Le résultat de ces traitements de type papillon sont des échantillons intermédiaires également ordonnées au sein de quatre segments intermédiaires contenant chacun N/4 échantillons intermédiaires.

Plus précisément, le premier segment intermédiaire contient les échantillons intermédiaires $A_i^{K*}$, le deuxième segment intermédiaire contient les échantillons intermédiaires $A_{N/4+i}^{K*}$, le troisième segment intermédiaire contient les échantillons $A_{N/2+i}^{K*}$ et le quatrième segment intermédiaire contient les échantillons $A_{3N/4+i}^{K*}$.

Ces échantillons intermédiaires sont obtenus selon les formules (VII) à (X) suivantes :

$$A_i^{K*} = A_i^K + A_{N/4+i}^K + A_{N/2+i}^K + A_{3N/4+i}^K \qquad (VII)$$

$$A_{N/4+i}^{K*} = A_i^K - A_{N/4+i}^K + A_{N/2+i}^K - A_{3N/4+i}^K \qquad (VIII)$$

$$A_{N/2+i}^{K*} = A_i^K - j\, A_{N/4+i}^K - A_{N/2+i}^K + j\, A_{3N/4+i}^K \qquad (IX)$$

$$A_{3N/4+i}^{K*} = A_i^K + j\, A_{N/4+i}^K - A_{N/2+i}^K - j\, A_{3N/4+i}^K \qquad (X).$$

Dans ces formules, j désigne le nombre complexe dont le carré est égal à -1, et i varie de 0 à N/4-1.

Ces échantillons intermédiaires sont ensuite multipliées par des coefficients prédéterminés $W^0$ (c'est-à-dire 1), $W^i$, $W^{2i}$ et $W^{3i}$ selon les segments considérés. Ces coefficients sont des coefficients complexes classiques bien connus de l'homme du métier, donnés par la formule :

$$W^{pi} = e^{+2j\pi pi/N}$$

où p varie de 0 à 3 et i de 0 à N/4-1.

Après multiplication par ces coefficients W, on obtient, en sortie de l'étage de traitement, quatre blocs $BB^{4K}$, $BB^{4K+1}$, $BB^{4K+2}$, $B_i^{4K+3}$ contenant respectivement N/4 échantillons de sortie, $B_i^{4K}$, $B_i^{4K+1}$, $B_i^{4K+2}$ et $B_i^{4K+3}$, avec i variant de 0 à N/4-1.

Tous les blocs BB seront alors traités consécutivement par les moyens de traitement élémentaires de l'étage suivant, chacun de ces blocs étant considéré comme un symbole d'entrée pour cet étage suivant.

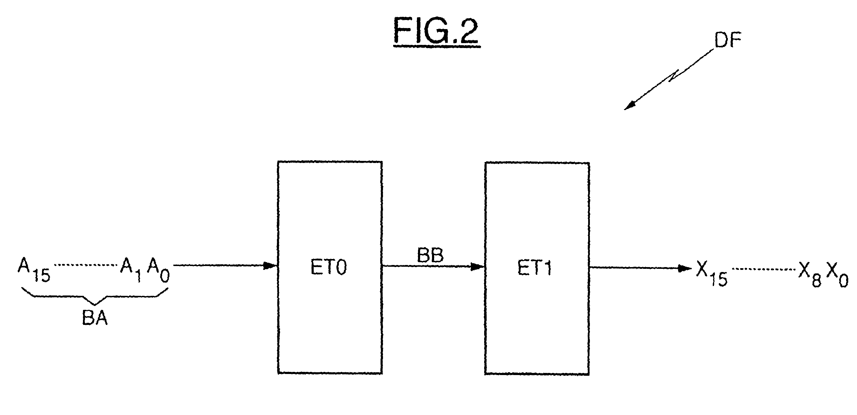

Sur la figure 2, la référence DF désigne ici une architecture pipelinée comportant deux étages de traitement à radix 4, référencés ET0 et ET 1. Ces deux étages de traitement effectuent des traitements élémentaires de transformée de Fourier conformément à l'opérateur illustré sur la figure 1.

Sur cette figure 2, on a supposé, à des fins de simplification, que la taille du symbole d'entrée BA est égale à 16, la taille de la transformée de Fourier étant de ce fait aussi égale à 16.

L'étage d'entrée ET0 reçoit des flots de symboles BA, comportant respectivement seize échantillons $A_0$-$A_{15}$. La sortie de l'étage ET0 délivre des blocs successifs BB de quatre échantillons qui sont traitées dans l'étage ET1. Cet étage ET 1 délivre le symbole de sortie $X_{15}$ ... $X_8 X_0$ correspondant à la transformation de Fourier inverse du symbole d'entrée BA.

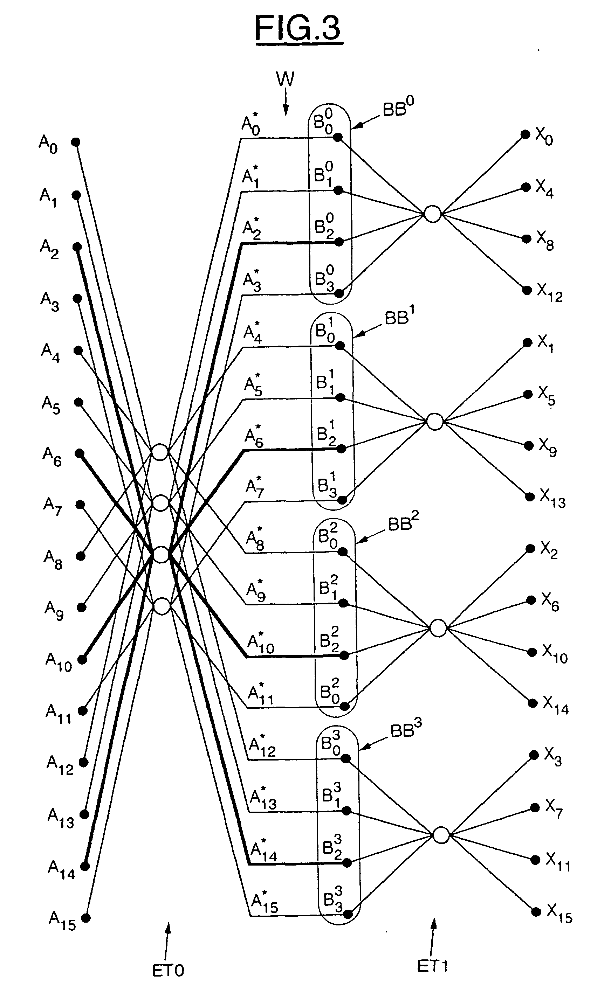

La figure 3 illustre le cas particulier des seize données (N=16) de chaque bloc reçu par l'étage ET0.

L'étage de traitement à radix 4 effectue alors N/4 traitements du type papillon conformes au graphe de la figure 1, sur N/4 groupes distincts de quatre données formés respectivement par un échantillon du premier segment et les échantillons homologues des trois autres segments.

Dans l'exemple particulier de la figure 3, l'étage ET0 effectue un premier traitement de type papillon sur le groupe formé des échantillons $A_0$, $A_4$, $A_8$ et $A_{12}$, un deuxième traitement du type papillon sur un deuxième groupe formé des échantillons $A_1$, $A_5$, $A_9$ et $A_{13}$ et ainsi de suite jusqu'à un quatrième traitement de type papillon sur le quatrième groupe formé des échantillons $A_3$, $A_7$, $A_{11}$ et $A_{15}$.

Les moyens de traitement élémentaires de l'étape ET1 vont successivement effectuer un traitement de type papillon conforme au graphe de la figure 1 sur les quatre échantillons de chaque bloc d'entrée BB, de façon à obtenir des données intermédiaires B*, puis des échantillons de sortie qui sont en fait, dans le cas présent, le résultat de la transformée de Fourier inverse.

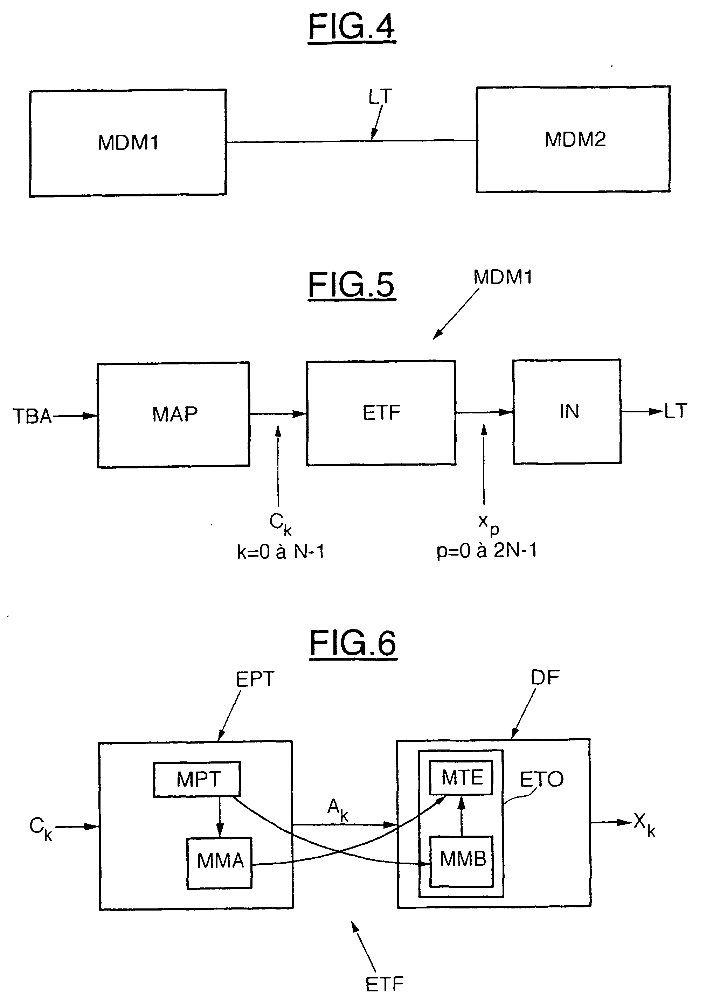

Sur la figure 4, les références MDM1 et MDM2 désignent respectivement deux modems dialoguant par l'intermédiaire d'une ligne téléphonique LT.

Chaque modem comporte une partie émettrice et une partie réceptrice. On s'intéresse, dans le cadre de la présente invention, à la partie émettrice d'un modem, et plus particulièrement ci-après à la partie émettrice du modem MDM 1.

Comme illustré plus particulièrement sur la figure 5, on voit que cette partie émettrice du modem MDM 1 comporte des moyens d'allocation de porteuse MAP, de structure classique et connue en soi, recevant un train de bits assynchrone TBA et délivrant un rythme régulier de porteuses à une fréquence prédéterminée, par exemple 11 MHz. Ce signal d'horloge est le signal de base référencé dans la suite du texte par la référence SMCK. Chaque porteuse complexe également désignée dans la suite "échantillon initial complexe" $C_k$ est associée à une fréquence $f_k$ sous-multiple de la fréquence d'échantillonnage. Typiquement, l'espace fréquentiel interporteuse est de l'ordre de quelques kHz. N (par exemple 2048) échantillons complexes initiaux $C_k$, tels que définis par la formule (III) ci-avant, forment un symbole complexe initial.

En pratique, les différents symboles sont mutuellement espacés d'un intervalle de garde constitué d'un nombre plus ou moins grand d'échantillons, qui peuvent être la recopie de certains échantillons du symbole suivant l'intervalle de garde. L'émission des différents symboles du flot de symboles émis par les moyens d'allocation de porteuse MAP sont cadencées par un signal d'horloge-symbole SCK dont la fréquence est typiquement de l'ordre de 5 kHz pour N=2048.

Chaque symbole complexe initial, formé des N échantillons complexes initiaux $C_k$ est ensuite transformé dans des moyens de transformation ETF en un groupe de 2N données réelles de sortie $x_p$, avec p variant de 0 à 2N-1. Les données de sortie $x_p$ sont ensuite transmises à une interface IN, de structure classique connue en soi, avant transmission sur la ligne téléphonique LT.

Comme représenté très schématiquement sur la figure 6, les N échantillons complexes initiaux $C_k$ d'un symbole complexe initial subissent dans un étage de prétraitement EPT une phase de prétraitement au cours de laquelle on élabore à partir de ces N échantillons complexes initiaux, N échantillons complexes auxiliaires $A_k$, tels que définis par la formule (VI) ci-avant et formant un symbole complexe auxiliaire.

Ce symbole auxiliaire subit ensuite dans des moyens de traitement DF à architecture pipelinée du type de ceux illustrés sur la figure 2, une transformée de Fourier inverse de taille N permettant la délivrance de N échantillons complexes de sortie $X_k$.

A cet égard, comme illustré plus particulièrement sur la figure 2, on voit que les échantillons de sortie $X_k$ sortent dans un ordre différent de l'ordre d'entrée des échantillons $A_k$. En fait, ils sortent dans un ordre dit "bit renversé" ("bit reverse") selon une dénomination bien connue de l'homme du métier. Plus précisément, si l'on se réfère au graphe de la figure 1, l'ordre dit "bit renversé" consiste à délivrer successivement à la sortie de chaque étage de traitement du système à architecture pipelinée, les échantillons $B_i^{4K}$, $B_i^{4K+2}$, $B_i^{4K+1}$ et $B_i^{4K+3}$.

De ce fait, en pratique, les échantillons complexes de sortie $X_k$ subissent un réarrangement puis on en extrait les parties réelles et imaginaires de ces échantillons de sortie $X_k$ de façon à obtenir respectivement les données réelles de rangs pairs $x_{2p}$ et de rangs impairs $x_{2p+1}$ conformément aux formules (IV) et (V) ci-avant.

L'étage de prétraitement EPT comporte notamment des moyens de prétraitement MPT et une mémoire vive MMA, tandis que l'étage ETO des moyens DF comporte notamment des moyens de traitement élémentaires MTE capables d'effectuer le traitement de transformée de Fourier inverse du premier étage, et une mémoire vive MMB.

Les échantillons contenus dans chacun des symboles reçus sont délivrés au rythme du signal d'horloge de base SMCK. Les moyens MPT sont quant à eux cadencés par un signal d'horloge de travail MCK dont la fréquence est un multiple de la fréquence du signal de base SMCK. Plus précisément, cette fréquence est deux fois plus importante que la fréquence du signal de base SMCK, soit quatre fois plus importante selon les moyens MPT reçoivent au cours de chaque cycle du signal de base SMCK, soit la partie réelle et la partie imaginaire de chaque échantillon, soit uniquement la partie réelle ou la partie imaginaire. La fréquence du signal MCK dépend aussi de la bande passante des mémoires MMA et MMB, c'est-à-dire de leur capacité à stocker pour chaque échantillon complexe soit la partie réelle et la partie imaginaire, soit uniquement la partie réelle ou la partie imaginaire.

On suppose maintenant, à des fins de simplification, que l'on reçoit au cours de chaque cycle d'horloge du signal SMCK la partie réelle et la partie imaginaire d'un échantillon complexe $C_k$ et que les mémoires MMA et MMB peuvent stocker intégralement cet échantillon. Dans ce cas, la fréquence du signal d'horloge de travail MCK est de 22 MHz. Et chaque mémoire MMA, MMB pourra le cas échéant être adressée pendant la phase de prétraitement au moins une fois en lecture et une fois en écriture au cours de chaque cycle du signal SMCK, au rythme du signal MCK.

Bien entendu, si les mémoires MMA et MMB ne stockent pour chaque échantillon complexe que sa partie réelle ou sa partie imaginaire, la fréquence du signal d'horloge de travail MCK est de 44 MHz et chaque mémoire MMA, MMB pourrait le cas échéant être adressée deux fois en lecture et deux fois en écriture au cours de chaque cycle du signal SMCK, au rythme du signal MCK.

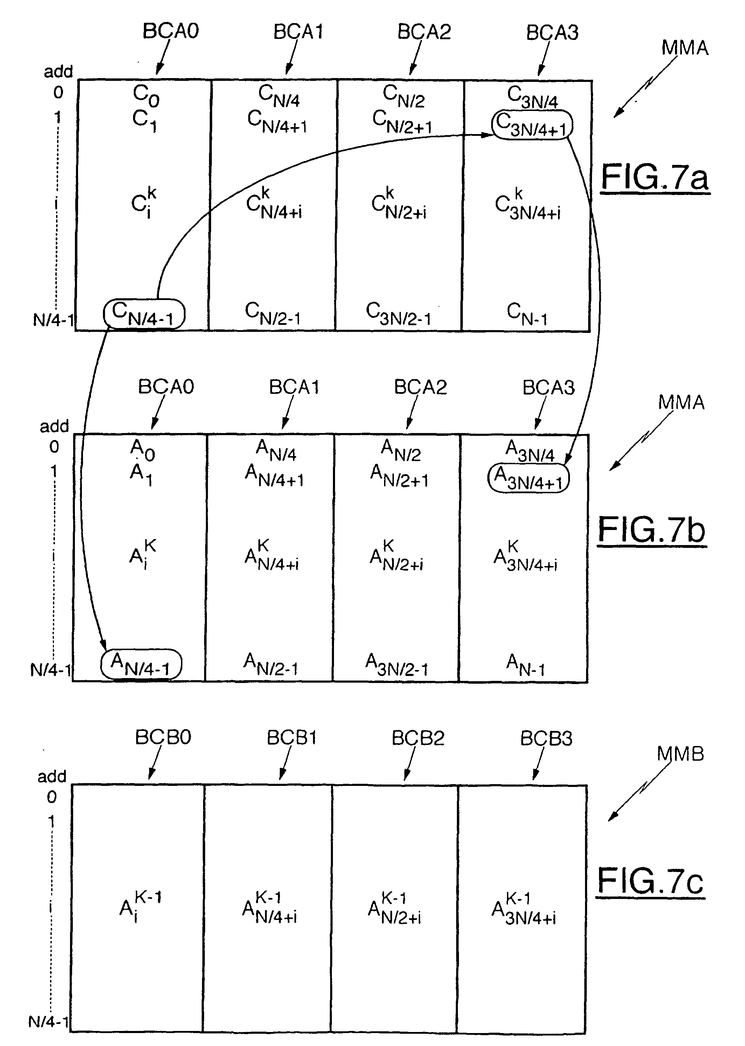

Comme illustré schématiquement sur la figure 6 et comme on va le voir maintenant plus en détail en se référant plus particulièrement aux figures 7a à 7c, la phase de prétraitement et le traitement élémentaire de transformée de Fourier inverse du premier étage ET0 du dispositif à architecture pipelinée, utilisent les deux mémoires distinctes MMA et MMB qui vont être permutées à chaque nouvelle réception d'un symbole complexe initial.

On suppose maintenant, en se référant plus particulièrement aux figures 7a à 7c, que l'étage ET0 est un étage à radix 4. Chacune des mémoires MMA et MMB, qui sont des mémoires à accès aléatoire (mémoire vive) simple accès, se compose de quatre bancs mémoire BCA0-BCA3 pour la mémoire MMA et BCB0-BCB3 pour la mémoire MMB. Chacun de ces bancs mémoire est indexé de 0 à 3 et chaque banc mémoire peut stocker N/4 échantillons complexes aux adresses Add allant de 0 à N/4-1.

Les moyens d'allocation de porteuse MAP délivrent à chaque cycle du signal d'horloge SMCK, un échantillon complexe initial $C_k$ (k variant de 0 à N-1), une indication de rang indiquant le rang k de cet échantillon initial au sein du symbole complexe initial, ainsi qu'une indication d'appariement, par exemple formée d'un bit, indiquant si l'échantillon complexe initial délivré est le premier de la paire formée par cet échantillon complexe initial et de son homologue apparié, ou bien s'il s'agit du deuxième délivré. On rappelle ici que deux échantillons appariés sont les échantillons de rang k et de rang N-k. Cette indication d'appariement est importante puisque l'homme du métier sait que les échantillons $C_k$ ne sont pas forcément délivrés dans l'ordre.

A titre d'exemple, le bit d'appariement ayant la valeur 0 et associé à la réception d'un échantillon complexe initial, indique que cet échantillon complexe initial est le premier reçu et que son homologue apparié n'a pas encore été reçu.

Par contre, si le bit d'appariement associé à un échantillon complexe initial vaut 1, cela signifie que cet échantillon complexe initial est le deuxième reçu de la paire et que par conséquent sont homologue apparié a déjà été reçu.

On suppose maintenant que l'étage de prétraitement EPT reçoit le symbole complexe initial de rang K et que les moyens de prétraitement utilisent la mémoire MMA.

Si le bit d'appariement associé à l'échantillon initial de rang k vaut 0, on stocke, au cours du cycle correspondant du signal SMCK, cet échantillon $C_k$ dans le banc mémoire de la mémoire MMA ayant l'index égal à E[4k/N], où E désigne l'opérateur partie entière, et à l'adresse k modulo N/4.

Ainsi, comme illustré sur la figure 7a, l'échantillon $C_1$ sera stocké dans le banc 0 à l'adresse 1, tandis que l'échantillon $C_{N/2}$ sera stocké dans le banc mémoire BCA2 à l'adresse 0, tandis que l'échantillon $C_{N-1}$ sera stocké dans le banc mémoire BCA3 à l'adresse N/4-1.

Plus généralement, les échantillons $C_i^K$, $C_{N/4+i}^K$, $C_{N/2+i}^K$, $C_{3N/4+i}^K$, seront respectivement stockés dans les bancs mémoire BCA0, BCA1, BCA2, BCA3, à l'adresse i, i variant de 0 à N/4-1.

En fait, ceci est vrai si les échantillons reçus sont associés à un bit d'appariement égal à 0. Et, sur la figure 7a, on a représenté, à des fins de clarté, l'emplacement de stockage de tous les échantillons complexes initiaux $C_k$ du symbole de rang K à leur emplacement de stockage (index du banc et adresse de stockage) en supposant que chacun de ces échantillons était affecté du bit d'appariement égal à 0.

En réalité, ceci n'est pas le cas.

En effet, lorsqu'un échantillon complexe initial $C_k$ est associé à un bit d'appariement valant 1, on ne stocke pas cet échantillon initial dans la mémoire MMA. On extrait hors de la mémoire MMA l'échantillon initial apparié qui est stocké dans le banc mémoire d'index égal à E[4(N-k)/N] à l'adresse (N-k) modulo N/4. Puis on élabore l'échantillon auxiliaire complexe $A_k$ de rang k conformément à la formule (VI) ci-avant, que l'on stocke dans le banc mémoire d'index égal à E[4k/N] à l'adresse k modulo N/4. On élabore également l'échantillon auxiliaire $A_{N-k}$, de rang N-k (conformément à la formule (VI) ci-avant dans laquelle on a remplacé k par N-k)). Et on stocke cet échantillon auxiliaire de rang N-k dans le banc mémoire d'index égal à E[4(N-k)/N] à l'adresse (N-k) modulo N/4.

Cette extraction de l'échantillon apparié, l'élaboration des deux échantillons auxiliaires, puis leur stockage dans la mémoire MMA s'effectuent au cours du cycle d'horloge du signal SMCK par des accès en lecture et en écriture successifs de la mémoire MMA.

A titre d'exemple, on suppose, comme illustré par les flèches sur les figures 7a et 7b, que l'échantillon complexe initial $C_{3N/4+1}$ est associé à un bit d'appariement égal à 1. Son échantillon complexe apparié est donc l'échantillon $C_{N/4-1}$. On extrait donc cet échantillon apparié à l'adresse N/4-1 et l'on élabore à partir des deux échantillons complexes initiaux appariés $C_{N/4-1}$ et $C_{3N/4+1}$, l'échantillon complexe auxiliaire $A_{N/4-1}$, de rang N/4-1, que l'on stocke dans le banc mémoire d'index 0 à l'adresse N/4-1. On élabore également l'échantillon auxiliaire apparié $A_{3N/4+1}$, de rang 3N/4+1, que l'on stocke dans le banc mémoire BCA3 d'index 3 de la mémoire MMA à l'adresse 1.

Ainsi, au bout de N cycles d'horloge du signal d'horloge SMCK cadençant la réception des échantillons complexes initiaux, la mémoire MMA est entièrement remplie par les échantillons complexes auxiliaires $A_k^K$ formant le symbole auxiliaire de rang K associé au symbole initial de rang K.

Plus précisément, comme illustré sur la figure 7b, les quatre échantillons complexes auxiliaires $A_i^K$, $A_{N/4+i}^K$, $A_{N/2+i}^K$ et $A_{3N/4+i}^K$ sont alors tous stockés à l'adresse i (i variant de 0 à N/4-1), et ce dans les quatre bancs mémoire de la mémoire MMA.

Parallèlement à ce stockage des échantillons complexes auxiliaires de rang K, les moyens de traitement élémentaires MTE de l'étage ET0 effectuaient un traitement élémentaire de transformée de Fourier inverse du type papillon à partir du contenu de la mémoire MMB, qui contenait en fait le symbole auxiliaire de rang K-1.

Lors de la réception du symbole complexe initial suivant, de rang K+1, c'est-à-dire lors du cycle suivant du signal d'horloge symbole SCK, les moyens de traitement élémentaires MTE de l'étage ET0 vont utiliser le contenu de la mémoire MMA qui contient le symbole auxiliaire de rang K (figure 7b). Plus précisément, ce traitement élémentaire de transformée de Fourier du premier étage du graphe s'effectue successivement sur les N/4 groupes d'échantillons auxiliaires respectivement stockés à la même adresse i dans les quatre bancs mémoire de la mémoire MMA, conformément aux formules (VII) à (X) ci-avant.

Pour effectuer ce traitement élémentaire, un mode simple de réalisation consiste à accéder une seule fois en lecture au cours de chaque cycle du signal SMCK la mémoire MMA pour extraire les quatre échantillons auxiliaires stockés à l'adresse i, afin de calculer successivement et un par un, les échantillons $A_k^*$, k variant de 0 à N-1, puis les échantillons de sortie B.

Une autre possibilité consiste, au cours de chaque cycle du signal SMCK, d'accéder à la mémoire MMA une première fois en lecture pour calculer les quatre échantillons $A_i^*$, $A_{N/4+i}^*$, $A_{N/2+i}^*$, $A_{3N/4+i}^*$. L'échantillon $A_i^*$ est délivré alors à l'étage suivant après multiplication par le coefficient approprié, tandis que les échantillons $A_{N/4+i}^*$, $A_{N/2+i}^*$, $A_{3N/4+i}^*$ sont réécrits dans la mémoire en attendant d'être délivrés à l'étage suivant. Dans ce mode de réalisation, les moyens de traitement élémentaires sont cadencés par le signal MCK. (Il convient de noter ici que dans les étages suivants de l'architecture pipelinée, les moyens de traitement élémentaires correspondants sont également de préférence conformes à ce mode de réalisation à la différence près que les échantillons délivrés $A^*$ sont remplacés au fur et à mesure dans la mémoire de l'étage correspondant par les échantillons correspondants A du symbole suivant).

Par ailleurs, au cours de ce cycle d'horloge suivant du signal SCK, les moyens de prétraitement, qui reçoivent le symbole initial de rang K+1, vont élaborer et stocker le symbole auxiliaire de rang K+1 dans la mémoire MMB conformément à ce qui a été décrit ci-avant pour la mémoire MMA.

Et, au cycle d'horloge-symbole suivant, les moyens de traitement élémentaires MTE de l'étage ET0 vont utiliser à nouveau le contenu de la mémoire MMB, tandis que les moyens de prétraitement qui vont recevoir le symbole complexe initial de rang K+2 vont à nouveau utiliser la mémoire MMA pour le stockage du symbole complexe auxiliaire de rang K+2, et ainsi de suite.

En ce qui concerne la réalisation matérielle des différents opérateurs (sous forme de circuits intégrés ou sous forme de circuits logiques reprogrammables (FPGA en langue anglaise)), que ce soit les opérateurs de prétraitement ou de transformée de Fourier, ceux-ci peuvent être aisément réalisés de façon simple par l'homme du métier, par exemple par synthèse automatique à partir des formules ci-avant et de la description fonctionnelle de mise en oeuvre ci-avant. A cet égard, ces opérateurs et les moyens de traitement élémentaire de transformée de Fourier comportent notamment des multiplieurs et des additionneurs ainsi que des mémoires mortes contenant les valeurs sinus et cosinus des coefficients complexes $e^{j\pi\kappa/N}$ (formule VI) et $W^{pi}$.

Les moyens de commande permettant de permuter les deux mémoires peuvent être réalisés par des multiplexeurs commandés reliant alternativement les moyens de prétraitement MPT et MTE aux deux mémoires.

En ce qui concerne l'élaboration des adresses et des indexes des bancs mémoire, ces moyens peuvent être aisément réalisés de façon simple par l'homme du métier à partir de multiplieurs et de soustracteurs.

Enfin, ce qui a été décrit ci-avant pour un radix 4, s'applique aisément à un radix 2, en utilisant des mémoires MMA et MMB à deux bancs mémoire chacune.

**Revendications**

1. Procédé de transformation d'un flot de symboles complexes initiaux respectivement formés de N échantillons complexes initiaux ($C_k$), en un flot de groupes respectifs de 2N données réelles de sortie, par un traitement du type entrelacé comportant une phase de prétraitement dans laquelle pour chaque symbole initial reçu on élabore un symbole auxiliaire formé de N échantillons complexes auxiliaires ($A_k$), et une phase de traitement comportant pour chaque symbole auxiliaire un calcul de transformée de Fourier inverse de taille N incluant des traitements élémentaires du type papillon correspondant à plusieurs étages d'un graphe de calcul en forme générale de papillon, et délivrant les 2N données réelles de sortie ($x_p$) correspondant au symbole initial reçu, **caractérisé par le fait que** les différents étages du graphe étant implémentés au sein d'une architecture pipelinée (DF), lors de la réception d'un symbole initial, on utilise simultanément deux mémoires vives distinctes (MMA, MMB) pour respectivement stocker dans une première mémoire (MMA) le symbole auxiliaire correspondant à ce symbole initial et effectuer à partir du contenu de la deuxième mémoire (MMB) le traitement élémentaire correspondant au premier étage du graphe, et on permute les deux mémoires à chaque nouvelle réception d'un symbole initial.

2. Procédé selon la revendication 1, **caractérisé par le fait que** les deux mémoires sont des mémoires à accès aléatoire simple accès de structure identique, **par le fait qu'**on élabore et on stocke par paire les échantillons complexes auxiliaires ($A_k$) dans la mémoire correspondante, chaque paire étant élaborée et stockée au cours d'un cycle du signal d'horloge de base (SMCK) cadençant la réception des échantillons complexes initiaux.

3. Procédé selon la revendication 2, **caractérisé par le fait qu'**on élabore l'échantillon auxiliaire de rang k à partir d'une paire d'échantillons initiaux appariés formée par l'échantillon initial de rang k au sein du symbole initial et de l'échantillon initial de rang N-k, **par le fait que**, r désignant le radix de la transformée de Fourier élémentaire inverse associée au premier étage du graphe, on subdivise chacune des deux mémoires (MMA, MMB) en r bancs mémoire indépendants de taille identique égale à N/r, on reçoit avec chaque échantillon initial, une indication de rang représentative de son rang au sein du symbole et une indication d'appariement indiquant si l'échantillon initial reçu est le premier reçu ou le deuxième reçu de la paire correspondante, et **par le fait que** si l'indication d'appariement associée à un échantillon initial est représentative du premier reçu, on stocke cet échantillon dans la mémoire correspondante (MMA), tandis que si l'indication d'appariement associée à un échantillon initial est représentative du deuxième reçu, on extrait de ladite mémoire correspondante (MMA) l'échantillon initial apparié à cet échantillon reçu en deuxième, on élabore à partir de ces deux échantillons initiaux appariés de rang k et de rang N-k, les deux échantillons auxiliaires appariés de rang k et de rang N-k, que l'on stocke dans deux bancs mémoire distincts de la même mémoire correspondante (MMA) respectivement aux adresses de stockage associées aux deux échantillons initiaux de rang k et de rang N-k, et **par le fait que** le traitement élémentaire de transformée de Fourier du premier étage du graphe s'effectue successivement sur les N/r groupes d'échantillons auxiliaires respectivement stockés à la même adresse dans les r bancs mémoire de l'autre mémoire correspondante (MMB).

4. Procédé selon la revendication 3, **caractérisé par le fait que** les bancs mémoire sont indexés de 0 à r-1 et tous adressables par des adresses comprises entre 0 et N/r 1, **par le fait que** si l'indication d'appariement associée à un échantillon initial de rang k est représentative du premier reçu, on stocke cet échantillon ($C_k$) dans le banc mémoire d'index égal à E[rk/N], où E désigne l'opérateur partie entière, à l'adresse k modulo N/r, **par le fait que** si l'indication d'appariement associée à un échantillon initial de rang k est représentative du deuxième reçu, on extrait de la mémoire l'échantillon initial apparié ($C_{N-k}$) stocké dans le banc mémoire d'index égal à E[r(N - k)/N] à l'adresse (N - k) modulo N/r, puis on élabore l'échantillon auxiliaire de rang k que lon stocke dans le banc mémoire d'index égal à E[rk/N] à l'adresse k modulo N/r, et l'échantillon auxiliaire de rang N-k que lon stocke dans le banc mémoire d'index égal à E[r(N - k)/N] à l'adresse (N - k) modulo N/r.

5. Dispositif de transformation d'un flot de symboles complexes initiaux respectivement formés de N échantillons complexes initiaux, en un flot de groupes respectifs de 2N données réelles de sortie, comportant des moyens de transformation (ETF) du type entrelacé comportant des moyens de prétraitement (MPT) aptes à élaborer pour chaque symbole initial reçu un symbole auxiliaire formés de N échantillons complexes auxiliaires, et des moyens de traitement (DF) aptes à effectuer pour chaque symbole auxiliaire un calcul de transformée de Fourier inverse de taille N incluant des traitements élémentaires (MTE) du type papillon correspondant à plusieurs étages d'un graphe de calcul en forme générale de papillon, et délivrant les 2N données réelles de sortie correspondant au symbole initial reçu, **caractérisé par le fait que** les moyens de traitement (DF) sont à architecture pipelinée, **par le fait que** le dispositif comporte deux mémoires vives distinctes (MMA, MMB), **par le fait que** lors de la réception d'un symbole initial, les moyens de prétraitement (MPT) sont aptes à stocker dans une première mémoire le symbole auxiliaire correspondant à ce symbole initial et, simultanément les moyens de traitement élémentaires (MTE) du premier étage des moyens de traitement à architecture pipelinée sont aptes à effectuer à partir du contenu de la deuxième mémoire le traitement élémentaire correspondant au premier étage du graphe, et **par le fait qu'**il comprend en outre des moyens de commande aptes à permuter l'accès aux deux mémoires par les moyens de prétraitement (MPT) et les moyens de traitement élémentaires (MTE), à chaque nouvelle réception d'un symbole initial.

6. Dispositif selon la revendication 5, **caractérisé par le fait que** les deux mémoires sont des mémoires à accès aléatoire simple accès (MMA, MMB) de structure identique, **par le fait que** les moyens de prétraitement (MPT) sont aptes à élaborer et à stocker par paire les échantillons complexes auxiliaires dans la mémoire correspondante.

7. Dispositif selon la revendication 5 ou 6, **caractérisé par le fait que** les moyens de prétraitement (MPT) sont aptes à élaborer l'échantillon auxiliaire de rang k à partir d'une paire d'échantillons initiaux appariés formée par l'échantillon initial de rang k au sein du symbole initial et de l'échantillon initial de rang N-k, **par le fait que**, r désignant le radix de la transformée de Fourier élémentaire inverse associée au premier étage du graphe, chacune des deux mémoires est subdivisée en r bancs mémoire de taille identique égale à N/r, **par le fait que** les bancs mémoire sont indexés de 0 à r-1 et tous adressables par des adresses comprises entre 0 et N/r-1, **par le fait qu'**à chaque échantillon initial reçu sont associées une indication de rang représentative de son rang au sein du symbole et une indication d'appariement indiquant si l'échantillon initial reçu est le premier reçu ou le deuxième reçu de la paire correspondante, **par le fait que** si l'indication d'appariement associée à un échantillon initial de rang k est représentative du premier reçu, les moyens de prétraitement sont aptes à stocker cet échantillon dans le banc mémoire d'index égal à E[rk/N], où E désigne l'opérateur partie entière, à l'adresse k modulo N/r, **par le fait que** si l'indication d'appariement associée à un échantillon initial de rang k est représentative du deuxième reçu, les moyens de prétraitement sont aptes à extraire de la mémoire l'échantillon initial apparié stocké dans le banc mémoire d'index égal à E[r(N - k)/N] à l'adresse (N - k) modulo N/r, puis à élaborer l'échantillon auxiliaire de rang k et à le stocker dans le banc mémoire d'index égal à E[rk/N] à l'adresse k modulo N/r, et à élaborer l'échantillon auxiliaire de rang N-k et à le stocker dans le banc mémoire d'index égal à E[r(N - k)/N] à l'adresse (N - k) modulo N/r, et **par le fait que** les moyens de traitement élémentaires effectuent successivement des traitements de type papillon sur les N/r groupes d'échantillons auxiliaires respectivement stockés à la même adresse dans les r bancs mémoire de la mémoire correspondante.

**Patentansprüche**

1. Verfahren zur Transformation eines Flusses von komplexen Anfangssymbolen, die jeweils aus N komplexen Anfangsabtastwerten ($C_k$) bestehen, in einen Fluß von jeweiligen Gruppen aus 2N reellen Ausgangsdaten mittels einer Verarbeitung des Verschachtelungstyps, die aufweist:

eine Vorverarbeitungsphase, in welcher für jedes empfangene Anfangssymbol ein Hilfssymbol ausgearbeitet wird, das aus N komplexen Hilfsabtastwerten ($A_k$) besteht, und
eine Verarbeitungsphase, die für jedes Hilfssymbol eine Berechnung einer inversen Fouriertransformation der Größe N aufweist, unter Einschluß von elementaren Verarbeitungen des Schmetterlingstyps, die mehreren Stufen eines Berechnungsgraphen in der allgemeinen Form eines Schmetterlings entsprechen, und unter Ausgabe von 2N reellen Ausgangsdaten ($x_p$), die einem empfangenen Anfangssymbol entsprechen,

**dadurch gekennzeichnet, daß**
die verschiedenen Stufen des Graphen innerhalb einer Pipeline-Architektur (DF) implementiert sind
beim Empfang eines Anfangssymbols gleichzeitig zwei separate RAM-Speicher (MMA,MMB) verwendet werden, um jeweils in einem ersten Speicher (MMA) das zu diesem Anfangssymbol zugehörige Hilfssymbol zu speichern und um ausgehend vom Inhalt des zweiten Speichers (MMB) die elementare Verarbeitung, die der ersten Stufe des Graphen entspricht, auszuführen, und

die zwei Speicher bei jedem neuen Empfang eines Anfangssymbols permutiert werden.

**2.** Verfahren nach Anspruch 1, **dadurch gekennzeichnet, daß**

die zwei Speicher identisch aufgebaute RAM-Speicher mit einfachem Zugriff sind, und

die komplexen Hilfsabtastwerte ($A_k$) paarweise ausgearbeitet und in dem entsprechenden Speicher gespeichert werden, wobei jedes Paar während eines Zyklus des Grundtaktsignals (SMCK), das den Empfang von komplexen Anfangsabtastwerten taktet, ausgearbeitet und gespeichert wird.

**3.** Verfahren nach Anspruch 2, **dadurch gekennzeichnet,**

**daß** der Hilfsabtastwert vom Rang k ausgehend von einem Paar von gepaarten Anfangsabtastwerten ausarbeitet wird, das aus dem Anfangsabtastwert vom Rang k innerhalb des Anfangssymbols und dem Anfangsabtastwert vom Rang N-k besteht,

**daß** jeder der zwei Speicher (MMA,MMB) in r unabhängige Speicherbänke identischer Größe gleich N/r unterteilt wird, wobei r die Basis der zur ersten Stufe des Graphen zugehörigen elementaren inversen Fouriertransformation bezeichnet, mit jedem Anfangsabtastwert eine Ranganzeige, die seinen Rang innerhalb des Symbols repräsentiert, und eine Paarungsanzeige empfangen wird, die anzeigt, ob der empfangene Anfangsabtastwert der erste empfangene oder der zweite empfangene Abtastwert des entsprechenden Paares ist,

**daß**, wenn die zu einem Anfangsabtastwert zugehörige Paarungsanzeige den ersten empfangenen repräsentiert, dieser Abtastwert im entsprechenden Speicher (MMA) gespeichert wird, während wenn die zu einem Anfangsabtastwert zugehörige Paarungsanzeige den zweiten empfangenen Abtastwert repräsentiert, aus dem entsprechenden Speicher (MMA) der Anfangsabtastwert, der mit diesem als zweites empfangenen Abtastwert gepaart ist, herausgeholt wird, ausgehend von diesen zwei gepaarten Anfangsabtastwerten vom Rang k und vom Rang N-k die zwei gepaarten Hilfsabtastwerte vom Rang k und vom Rang N-k ausgearbeitet werden, die in zwei separaten Speicherbänken des gleichen entsprechenden Speichers (MMA) jeweils an den Speicheradressen, die zu den zwei Anfangsabtastwerten vom Rang k und vom Rang N-k gehören, gespeichert werden, und

**daß** die elementare Fouriertransformationsverarbeitung der ersten Stufe des Graphen nacheinander an den N/r Gruppen von Hilfsabtastwerten vorgenommen wird, die jeweils an der gleichen Adresse in den r Speicherbänken des anderen entsprechenden Speichers (MMB) gespeichert sind.

**4.** Verfahren nach Anspruch 3, **dadurch gekennzeichnet, daß** die Speicherbänke mit einem Index von 0 bis r-1 versehen sind und alle über Adressen zwischen 0 und N/r-1 adressierbar sind,

daß, wenn die Paarungsanzeige, die zu einem Anfangsabtastwert vom Rang k gehört, den ersten empfangenen Abtastwert repräsentiert, dieser Abtastwert ($C_k$) in der Speicherbank mit dem Index E[rk/N], wobei E den Operator für den ganzzahligen Teil bezeichnet, an der Adresse k modulo N/r gespeichert wird, und

daß, wenn die zu einem Anfangsabtastwert vom Rang k zugehörige Paarungsanzeige den zweiten empfangenen Abtastwert repräsentiert, aus dem Speicher der gepaarte Anfangsabtastwert ($C_{N-k}$), der in der Speicherbank mit dem Index E[r(N-k)/N] an der Adresse (N-k) modulo N/r gespeichert ist, herausgeholt wird, dann der Hilfsabtastwert vom Rang k ausgearbeitet wird, der in der Speicherbank mit dem Index E[rk/N] an der Adresse k modulo N/r gespeichert wird, und der Hilfsabtastwert vom Rang N-k ausgearbeitet wird, der in der Speicherbank mit dem Index E[r(N-k)/N] an der Adresse (N-k) modulo N/r gespeichert wird.

**5.** Vorrichtung zur Transformation eines Flusses von komplexen Anfangssymbolen, die jeweils aus N komplexen Anfangsabtastwerten bestehen, in einen Fluß von jeweiligen Gruppen aus 2N reellen Ausgangsdaten, wobei die Vorrichtung Transformationseinrichtungen (ETF) des Verschachtelungstyps aufweist, die aufweisen:

Vorverarbeitungseinrichtungen (MPT), die für jedes empfangene Anfangssymbol ein aus N komplexen Hilfsabtastwerten bestehendes Hilfssymbol ausarbeiten können, und

Verarbeitungseinrichtungen (DF), die für jedes Hilfssymbol eine Berechnung der inversen Fouriertransformation der Größe N ausführen können, unter Einschluß von elementaren Verarbeitungen (MTE) des Schmetterlingstyps, die mehreren Stufen eines Berechnungsgraphen in der allgemeinen Form eines Schmetterlings entsprechen, und unter Ausgabe von 2N reellen Ausgangsdaten, die dem empfangenen Anfangssymbol entsprechen,

**dadurch gekennzeichnet, daß** die Verarbeitungseinrichtungen (DF) eine Pipeline-Architektur haben,

daß die Vorrichtung zwei separate RAM-Speicher (MMA,MMB) aufweist,

daß beim Empfang eines Anfangssymbols die Vorverarbeitungseinrichtungen (MPT) in der Lage sind, in einem ersten Speicher das zu diesem Anfangssymbol zugehörige Hilfssymbol zu speichern, und gleichzeitig die elementaren Verarbeitungseinrichtungen (MTE) der ersten Stufe der Pipeline-Verarbeitungseinrichtungen in der Lage sind, ausgehend vom Inhalt des zweiten Speichers die elementare Verarbeitung, die der ersten Stufe des Graphen entspricht, auszuführen, und

daß die Vorrichtung ferner Steuereinrichtungen aufweist, die in der Lage sind, den Zugriff der Vorverarbeitungseinrichtungen (MPT) und elementaren Verarbeitungseinrichtungen (MTE) auf die zwei Speicher bei jedem neuen Empfang eines Anfangssymbols zu permutieren.

**6.** Vorrichtung nach Anspruch 5, **dadurch gekennzeichnet, daß**

die zwei Speicher identisch aufgebaute RAM-Speicher mit einfachem Zugriff (MMA, MMB) sind, und

daß die Vorverarbeitungseinrichtungen (MPT) in der Lage sind, die komplexen Hilfsabtastwerte paarweise auszuarbeiten und in dem entsprechenden Speicher zu speichern.

**7.** Vorrichtung nach Anspruch 5 oder 6, **dadurch gekennzeichnet, daß**

die Vorverarbeitungseinrichtungen (MPT) in der Lage sind, ausgehend von einem Paar von gepaarten Anfangsabtastwerten, das aus dem Anfangsabtastwert vom Rang k innerhalb des Anfangssymbols und dem Anfangsabtastwert vom Rang N-k besteht, den Hilfsabtastwert vom Rang k auszuarbeiten,

daß jeder der zwei Speicher in r Speicherbänke identischer Größe gleich N/r unterteilt ist, wobei r die Basis der zur ersten Stufe des Graphen zugehörigen elementaren inversen Fouriertransformation bezeichnet,

daß die Speicherbänke mit einem Index von 0 bis r-1 versehen sind und alle mit Adressen zwischen 0 und N/r-1 adressierbar sind,

daß zu jedem empfangenen Anfangsabtastwert eine Ranganzeige, die seinen Rang innerhalb des Symbols repräsentiert, und eine Paarungsanzeige gehört, die anzeigt, ob der empfangene Anfangsabtastwert der erste empfangene oder der zweite empfangene Abtastwert des entsprechenden Paares ist,

daß, wenn die zu einem Anfangsabtastwert vom Rang k zugehörige Paarungsanzeige den ersten empfangenen Abtastwert repräsentiert, die Vorverarbeitungseinrichtungen in der Lage sind, diesen Abtastwert in der Speicherbank mit dem Index E[rk/N], wobei E den Operator für den ganzzahligen Teil bezeichnet, an der Adresse k modulo N/r zu speichern,

daß, wenn die zu einem Anfangsabtastwert vom Rang k zugehörige Paarungsanzeige den zweiten empfangenen Abtastwert repräsentiert, die Vorverarbeitungseinrichtungen in der Lage sind, aus dem Speicher den gepaarten Anfangsabtastwert, der in der Speicherbank mit dem Index E[r(N-k)/N] an der Adresse (N-k) modulo N/r gespeichert ist, herauszuholen, dann den Hilfsabtastwert vom Rank k auszuarbeiten und ihn in der Speicherbank mit dem Index E[rk/N] an der Adresse k modulo N/r zu speichern, und den Hilfsabtastwert vom Rang N-k auszuarbeiten und ihn in der Speicherbank mit dem Index E-[r(N-k)/N] an der Adresse (N-k) modulo N/r zu speichern, und

daß die elementaren Verarbeitungseinrichtungen Verarbeitungen des Schmetterlingstyps nacheinander an den N/r Gruppen von Hilfsabtastwerten ausführen, die jeweils an der gleichen Adresse in den r Speicherbänken des entsprechenden Speichers gespeichert sind.

## Claims

**1.** Process for transforming a stream of initial complex symbols respectively formed of N initial complex samples ($C_k$), into a stream of respective groups of 2N real output data, by a processing of the interleaved type comprising a preprocessing phase in which for each initial symbol received, an auxiliary symbol formed of N auxiliary complex samples ($A_k$) is formulated, and a processing phase comprising for each auxiliary symbol an inverse Fourier transform calculation of size N including elementary processings of the butterfly type corresponding to several stages of a general butterfly-like calculation graph, and delivering the 2N real output data ($x_p$) corresponding to the initial symbol received, **characterized in that** the various stages of the graph being implemented within a pipelined architecture (DF), upon receiving an initial symbol, two separate random access memories (MMA, MMB) are used simultaneously so as respectively to store in a first memory (MMA) the auxiliary symbol corresponding to this initial symbol and to perform on the basis of the content of the second memory (MMB) the elementary processing corresponding to the first stage of the graph, and the two memories are swapped with each new receipt of an initial symbol.

**2.** Process according to Claim 1, **characterized in that** the two memories are single-access random access memories of identical structure, **in that** the auxiliary complex samples ($A_k$) are formulated and stored pairwise in the corresponding memory, each pair being formulated and stored in the course of a cycle of the basic clock signal (SMCK) regulating the reception of the initial complex samples.

**3.** Process according to Claim 2, **characterized in that** the auxiliary sample of rank k is formulated on the basis of a pair of paired initial samples which is formed by the initial sample of rank k within the initial symbol and of the initial sample of rank N-k, **in that**, r denoting the radix of the inverse elementary Fourier transform associated with the first stage of the graph, each of the two memories (MMA, MMB) is subdivided into r independent memory banks of identical size equal to N/r, there are received, with each initial sample, a rank indication representative of its rank within the symbol and a pairing indication indicating whether the initial sample received is the first received or the second received of the corresponding pair, and **in that** if the pairing indication associated with an initial sample is representative of the first received, this sample is stored in the corresponding memory (MMA), whilst if the pairing indication associated with an initial sample is representative of the second received, the initial sample paired with this sample received second is extracted from the said corresponding memory (MMA), the two paired auxiliary samples of rank k and of rank N-k are formulated on the basis of these two paired initial samples of rank k and of rank N-k, and the former samples are stored in two separate memory banks of the same corresponding memory (MMA) respectively at the storage addresses associated with the two initial samples of rank k and of rank N-k, and **in that** the elementary Fourier transform processing of the first stage of the graph is performed successively on the N/r groups of auxiliary samples respectively stored at the same address in the r memory banks of the other corresponding memory (MMB).

**4.** Process according to Claim 3, **characterized in that** the memory banks are indexed from 0 to r-1 and all addressable by addresses lying between 0 and N/r-1, **in that** if the pairing indication associated with an initial sample of rank k is representative of the first received, this sample ($C_k$) is stored in the memory bank of index equal to E[rk/N], where E denotes the integer part operator, at the address k modulo N/r, **in that** if the pairing indication associated with an initial sample of rank k is representative of the second received, the paired initial sample ($C_{N-k}$) stored in the memory bank of index equal to E[r(N-k)/N] at the address (N-k) modulo N/r is extracted from the memory, then the auxiliary sample of rank k is formulated and stored in the memory bank of index equal to E[rk/N] at the address k modulo N/r, and the auxiliary sample of rank N-k is formulated and stored in the memory bank of index equal to E[r(N-k)/N] at the address (N-k) modulo N/r.

**5.** Device for transforming a stream of initial complex symbols respectively formed of N initial complex samples, into a stream of respective groups of 2N real output data, comprising transformation means (ETF) of the interleaved type comprising preprocessing means (MPT) able to formulate for each initial symbol received an auxiliary symbol formed of N auxiliary complex samples, and processing means (DF) able to perform for each auxiliary symbol an inverse Fourier transform calculation of size N including elementary processings (MTE) of the butterfly type corresponding to several stages of a general butterfly-like calculation graph, and delivering the 2N real output data corresponding to the initial symbol received, **characterized in that** the processing means (DF) are of pipelined architecture, **in that** the device comprises two separate random access memories (MMA, MMB), **in that** on receipt of an initial symbol, the preprocessing means (MPT) are able to store in a first memory the auxiliary symbol corresponding to this initial symbol and, simultaneously, the elementary processing means (MTE) of the first stage of the processing means with pipelined architecture are able to perform on the basis of the content of the second memory the elementary processing corresponding to the first stage of the graph, and **in that** it furthermore comprises control means able to swap access to the two memories by the preprocessing means (MPT) and the elementary processing means (MTE), with each new receipt of an initial symbol.

**6.** Device according to Claim 5, **characterized in that** the two memories are single-access random access memories (MMA, MMB) of identical structure, **in that** the preprocessing means (MPT) are able to formulate and to store pairwise the auxiliary complex samples in the corresponding memory.

**7.** Device according to Claim 5 or 6, **characterized in that** the preprocessing means (MPT) are able to formulate the auxiliary sample of rank k on the basis of a pair of paired initial samples which is formed by the initial sample of rank k within the initial symbol and of the initial sample of rank N-k, **in that**, r denoting the radix of the inverse elementary Fourier transform associated with the first stage of the graph, each of the two memories is subdivided into r memory banks of identical size equal to N/r, **in that** the memory banks are indexed from 0 to r-1 and all addressable by addresses lying between 0 and N/r-1, **in that** with each initial sample received there are associated a rank indication representative of its rank within the symbol and a pairing indication indicating whether the initial sample received is the first received or the second received of the corresponding pair, **in that** if the pairing indication associated with an initial sample of rank k is representative of the first received, the preprocessing means are able to store this sample in the memory bank of index equal to E[rk/N], where E denotes the integer part operator, at the address k modulo N/r, **in that** if the pairing indication associated with an initial sample of rank k is representative of the second received, the preprocessing means are able to extract from the memory the paired initial sample stored in the memory bank of index equal to E[r(N-k)/N] at the address (N-k) modulo N/r, then to formulate the auxiliary sample of rank k and to store it in the memory bank of index equal to E[rk/N] at the address k modulo N/r, and to formulate the auxiliary sample of rank N-k and to store it in the memory bank of index equal to E[r(N-k)/N] at the address (N-k) modulo N/r, and **in that** the elementary processing means successively perform processings of butterfly type on the N/r groups of auxiliary samples respectively stored at the same address in the r memory banks of the corresponding memory.

# FIG.1

EP 1 058 435 B1

## FIG.2

DF

$A_{15}$ ........ $A_1$ $A_0$ → | ET0 | → BB → | ET1 | → $X_{15}$ ........ $X_8$ $X_0$

BA

# FIG.3

# FIG.4

MDM1 — LT — MDM2

# FIG.5

MDM1

TBA → MAP → ETF → IN → LT

$C_k$
k=0 à N-1

$x_p$
p=0 à 2N-1

# FIG.6

EPT

DF

MPT

MTE

ETO

$C_k$ →

$A_k$

MMA

MMB

→ $X_k$

ETF

BCA0　　　　BCA1　　　　BCA2　　　　BCA3　　　　　　MMA

add

| | | | |
|---|---|---|---|
| $C_0$ | $C_{N/4}$ | $C_{N/2}$ | $C_{3N/4}$ |
| $C_1$ | $C_{N/4+1}$ | $C_{N/2+1}$ | $\boxed{C_{3N/4+1}}$ |
| $C_i^k$ | $C_{N/4+i}^k$ | $C_{N/2+i}^k$ | $C_{3N/4+i}^k$ |
| $\boxed{C_{N/4-1}}$ | $C_{N/2-1}$ | $C_{3N/2-1}$ | $C_{N-1}$ |

## FIG.7a

BCA0　　　　BCA1　　　　BCA2　　　　BCA3　　　　　　MMA

add

| | | | |
|---|---|---|---|
| $A_0$ | $A_{N/4}$ | $A_{N/2}$ | $A_{3N/4}$ |
| $A_1$ | $A_{N/4+1}$ | $A_{N/2+1}$ | $\boxed{A_{3N/4+1}}$ |
| $A_i^K$ | $A_{N/4+i}^K$ | $A_{N/2+i}^K$ | $A_{3N/4+i}^K$ |
| $\boxed{A_{N/4-1}}$ | $A_{N/2-1}$ | $A_{3N/2-1}$ | $A_{N-1}$ |

## FIG.7b

BCB0　　　　BCB1　　　　BCB2　　　　BCB3　　　　　　MMB

add

| | | | |
|---|---|---|---|
| $A_i^{K-1}$ | $A_{N/4+i}^{K-1}$ | $A_{N/2+i}^{K-1}$ | $A_{3N/4+i}^{K-1}$ |

## FIG.7c